# EUROPÄISCHE PATENTSCHRIFT

(11) **EP 1 217 236 B1**
(45) Veröffentlichungstag und Bekanntmachung des Hinweises auf die Patenterteilung: **08.02.2006**
(21) Anmeldenummer: 01128862.8
(22) Anmeldetag: 05.12.2001
(51) Int. Cl.: F16C 33/78, F16C 19/26, F16C 19/28

(54) **Stützrollenlager als gedichtete Baueinheit**
Bearing of a supporting roller as sealed unit
Palier pour un rouleau de support comme unité étanchée

(30) Priorität: 12.12.2000 DE 10061786
(43) Veröffentlichungstag der Anmeldung: 26.06.2002
(73) Patentinhaber: FAG Kugelfischer AG & Co. oHG, 97421 Schweinfurt (DE)
(72) Erfinder: Neubert, Frank, 97453 Schonungen (DE); Sebald, Wilhelm, 97631 Bad Königshofen (DE)

(56) Entgegenhaltungen:
- DE-A- 19 915 975
- DE-U- 1 835 256
- DE-U- 1 888 006
- GB-A- 739 655
- GB-A- 865 003

## Beschreibung

### Gebiet der Erfindung

Stützrollenlager sind Wälz- oder Gleitlager, die zur Führung von Bauteilen in verschiedenen Anwendungen eingesetzt werden. Im Bereich der Luftfahrt werden diese Stützrollenlager zur Abstützung z. B. der Landeklappen benutzt.

### Hintergrund der Erfindung

Im Bereich der Luftfahrt werden diese Stützrollenlager in extremen klimatischen Bedingungen eingesetzt. Gleichzeitig sind die hohen Sicherheitsstandards dieser Stützrollenlager im Einsatz in Flugzeugen zu berücksichtigen. Um den Ansprüchen im Flugeinsatz gerecht zu werden, sind sehr gut abgedichtete Stützrollenlager unumgänglich. Die Dichtung zwischen drehendem Außenring und Anlaufscheibe hat dabei die Aufgabe, das Lager vor dem Eindringen von Verschmutzungen zu schützen, bei vereisten Dichtflächen noch eine Abdichtung zu garantieren und bei einem direkten Aufspritzen von Enteiserflüssigkeit das Eindringen dieser Flüssigkeit verhindern. Beim Nachschmieren dieser Lager muß allerdings noch die Möglichkeit bestehen, dass das überschüssige Fett über die Dichtflächen austreten kann. Gleichzeitig besteht seitens der Luftfahrtfirmen noch die Forderung, dass diese Stützrollenlager vor der Montage im Flugzeug eine nicht zerlegbare Baueinheit bilden und bei der Handhabung und Montage nicht mehr auseinanderfallen können. In der Praxis wird dies über zusätzliche Bauteile gelöst.

In der DE-GM-1888006 wird ein Stützrollenlager gezeigt, das eine Baueinheit bilden kann. Dieses Lager hat den Nachteil, dass man einerseits konstruktiv bedingt die Dichtung als Spaltdichtung ausführen muss und dass man andererseits das Problem hat, dass bei innerem Überdruck die beiden Spaltdichtungen so nach außen gedrückt werden, dass überschüssiges Fett nicht entweichen kann.

In der DE-GM-1835256 wird ein Stützrollenlager gezeigt, bei dem die Dichtlippe ungeschützt ist, so dass aufgespritztes Enteisungsmittel daher direkt unter der Dichtlippe hindurchgelangen und so ins Lagerinnere kommen kann.

### Aufgabe der Erfindung

Der Erfindung liegt die Aufgabe zugrunde, eine Dichtung für ein Stützrollenlager zu schaffen, die einerseits eine Baueinheit zwischen Außenring und Anlaufscheibe schafft und andererseits die geforderten Dichtungseigenschaften erfüllt.

### Beschreibung der Erfindung

Die Lösung dieser Aufgabe erfolgt mit den Merkmalen und des kennzeichnenden Teiles des Anspruchs 1.

Durch die erfinderische Gestaltung der Dichtung, der Aufnahme der Dichtung auf der Axialscheibe und das Einschnappen der Dichtung in die Aussparung am Außenring entsteht am Ende der Montage des Stützrollenlagers eine Baueinheit, ohne daß zusätzliche Bauteile benötigt werden. Dabei ist die Dichtlippe so gestaltet, dass sie im Betrieb in der Aussparung im Außenring anliegt und beim Nachfüllen des Schmierfettes überschüssige Mengen nach außen abgeben kann.

Ein weiterer wesentlicher Vorteil besteht darin, dass durch die Anordnung der Dichtlippe in einer Aussparung, die Dichtlippe durch den ringförmigen Ansatz am Außenring geschützt wird, so dass kein Medium direkt auf oder direkt unter die Dichtlippe spritzen kann.

Die Dichtung kann sowohl bei gleitgelagerten als auch wälzgelagerten Stütz-und Kurvenrollen verwendet werden.

### Kurze Beschreibung der Zeichnung

- Fig. 1: Schnittdarstellung einer erfindungsgemäßen Stützrolle
- Fig. 2: Einzelheit der Dichtung nach Figur 1
- Fig. 3: Stützrolle mit Zapfen
- Fig. 4: Stützrolle mit in die Innenringe integrierten Anlaufscheiben

### Ausführliche Beschreibung der Zeichnungen

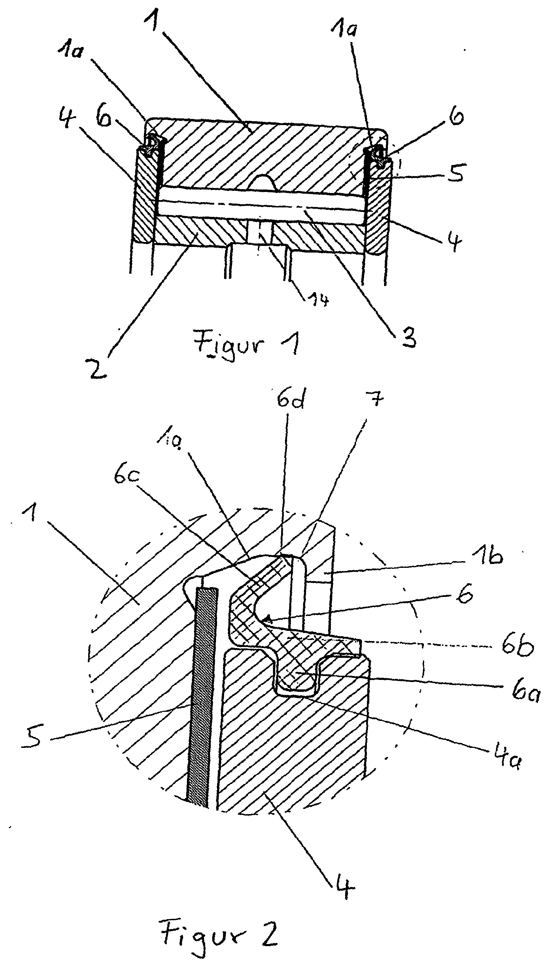

In Figur 1 ist eine wälzgelagerte Stützrolle bestehend aus Außenring 1, Innenring 2, Rollen 3, Anlaufscheibe 4, Gleitscheibe 5 und Dichtung 6 dargestellt. Der Innenring 2 ist mit einem Nachschmierkanal 14 versehen. Lösungen mit einer oder zwei Wälzkörperreihen sind in den Zeichnungen nicht einzeln dargestellt, da die Art der Wälzlagerung kein die Erfindung beeinflussendes Merkmal ist. Anstelle der Wälzkörper können auch Gleitschichten eingesetzt werden.

In der Figur 2 wird die erfinderische Dichtung 6 im Teilschnitt dargestellt. Die Dichtung 6 ist als ein Kunststoffbauteil ausgeführt. Der ringförmige Ansatz innen 6a der Dichtung 6, greift in die umlaufende Nut 4a der Anlaufscheibe 4 ein. In axialer Richtung ist die Dichtung 6 formschlüssig in der Nut 4a gesichert. Der Schenkel 6c der Dichtung 6, der schräg nach außen verläuft, endet mit der Dichtlippe 6d. Die Schräge des Schenkels 6c ist so gewählt, dass diese Dichtlippe bei innerem Überdruck z. B. beim Nachfüllen von Schmierfett öffnet und das überflüssige Fett somit nach außen gelangen kann. Die Dichtlippe 6d liegt elastisch in der Aussparung 1a an. Der ringförmige Ansatz am Außenring 1b schützt die Dichtlippe 6d vor dem direkten Einwirken von Medien .

Der Abstand des Spaltes 7 zwischen der Dichtlippe 6d und dem ringförmigen Ansatz am Außenring 1b ist so gewählt, dass bei der Montage die Dichtung 6 problemlos in der Aussparung 1a einschnappen kann. Zwischen Außenring 1 und Anlaufscheibe 4 ist eine Kunststoffgleitscheibe 5 angeordnet, um die Reibung zu reduzieren.

Es gibt auch Problemlösungen, in denen die Kunststoffgleitscheibe, die keine erfindungswesentlichen Merkmale enthält, nicht benötigt wird. Diese Möglichkeit ist in den Figuren nicht dargestellt.

In der Figur 3 ist eine Stützrolle mit Zapfen 11 dargestellt. Hierbei ist eine Anlaufscheibe einteilig mit dem Stehbolzen bzw. Zapfen 11 verbunden. Die Funktion der Dichtelemente ist die gleiche wie bei Figur 2.

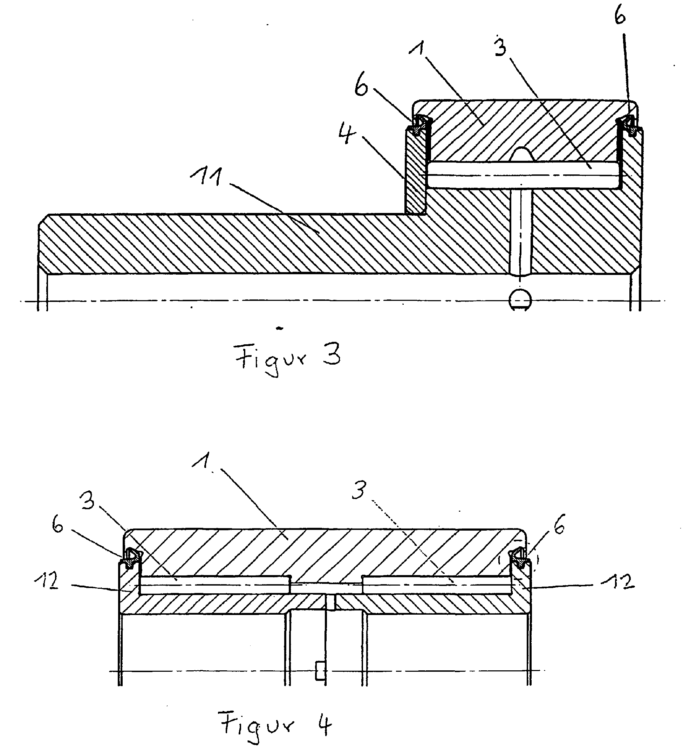

In der Figur 4 wird eine Stützrolle gezeigt, bei der die beiden Innenringe 12 einstückig mit einer Anlaufscheibe integriert sind. Die Funktion der Dichtung erfolgt wie bei Figur 2 beschrieben.

### Bezugszeichenliste:

- 1: Außenring
- 1a: Aussparung im Außenring
- 1b: ringförmiger Ansatz am Außenring
- 2: Innenring
- 3: Wälzkörper
- 4: Anlaufscheibe
- 4a: Nut der Anlaufscheibe
- 5: Gleitscheibe
- 6: Dichtelement
- 6a: ringförmiger Ansatz innen
- 6b: innen liegender Schenkel
- 6c: schräg nach außen verlaufender Schenkel
- 6d: Dichtlippe
- 7: Abstand zum ringförmigen Ansatz am Außenring
- 11: Stehbolzen
- 12: Innenring mit integrierter Anlaufscheibe
- 13: Gleitschicht
- 14: Schmierkanal

## Patentansprüche

1. Stützrollenlager, bestehend aus einem Außenring (1), mindestens einem Innenring (2) und zwischen den Ringen angeordneten Wälzkörpern (3) oder Gleitflächen, wobei zur axialen Führung an beiden Seiten des Lagers Anlaufscheiben (4) bestehen und eine Dichtung (6) zwischen Außenring (1) und Anlaufscheibe (4) angeordnet ist, **dadurch gekennzeichnet, dass** zur Bildung einer Baueinheit die Anlaufscheiben (4) im Außendurchmesser eine umlaufende Nut (4a) besitzen, in die ein ringförmiger Ansatz innen (6a) am Schenkel (6b) der im Schnitt etwa v-förmigen Dichtung (6) formschlüssig eingreift, wobei der eine schräg nach außen gerichtete Schenkel (6c) der Dichtung (6) als Dichtlippe (6d) an der Innenfläche einer Aussparung (1a) des Außenrings (1) anliegt und von dem ringförmigen Ansatz (1b) am Außenring überdeckt wird und der andere schräg nach außen gerichtete Schenkel (6c) der Dichtung (6) so geneigt ist, dass dieser Schenkel (6c) bei einem Überdruck im Lager öffnet.

2. Stützrollenlager nach Anspruch 1, **dadurch gekennzeichnet, dass** die Dichtung (6) mit seiner Dichtlippe (6d) der inneren Seitenfläche des ringförmigen Ansatzes am Außenring (1b) der Aussparung (1a) mit einem Spalt (7) gegenübersteht.

3. Stützrollenlager nach Anspruch 1 oder 2, **dadurch gekennzeichnet, dass** je eine Anlaufscheibe mit einer Innenringhälfte (12) integriert ist.

## Claims

1. Supporting roller bearing, consisting of an outer ring (1), at least one inner ring (2), and, arranged between the rings, rolling bodies (3) or sliding surfaces, thrust washers (4) being arranged on both sides of the bearing for purposes of axial guiding, and a seal (6) being arranged between outer ring (1) and thrust washer (4), **characterized in that** in order to form a structural unit the thrust washers (4) have in the outer diameter a circumferential groove (4a) in which there engages, with a form fit, an annular shoulder (6a) of the branch (6b) of the seal (6) which has an approximately v-shaped cross section, the one branch (6c), of the seal (6), directed obliquely outwards bears as sealing lip (6d) on the inner surface of a recess (1a) of the outer ring (1) and is covered by the annular shoulder on the outer ring (1b), and the other branch (6c), of the seal (6), directed obliquely outwards is inclined in such a way that this branch (6c) opens in the event of an overpressure in the bearing.

2. Supporting roller bearing according to Claim 1, **characterized in that** the sealing lip (6d) of the seal (6) lies opposite the inside lateral surface of the annular shoulder on the outer ring (1b) of the recess (1a) with a gap (7).

3. Supporting roller bearing according to Claim 1 or 2, **characterized in that** a thrust washer is in each case integrated with an inner ring half (12).

## Revendications

1. Palier à rouleaux de support, se composant d'une bague extérieure (1), d'au moins une bague intérieure (2), et de corps de roulement (3) ou de surfaces de glissement disposés entre les bagues, des disques de butée (4) étant prévus pour le guidage axial sur les deux côtés du palier, et un joint d'étanchéité (6) étant disposé entre la bague extérieure (1) et le disque de butée (4), **caractérisé en ce que** pour la formation d'une unité constructive, les disques de butée (4) présentent dans leur diamètre extérieur une rainure périphérique (4a), dans laquelle un insert annulaire vient en prise à l'intérieur (6a) sur la branche (6b) du joint d'étanchéité (6) de forme approximativement en v en coupe, l'une des branches (6c) du joint d'étanchéité (6) orientée obliquement vers l'extérieur s'appliquant sous forme de lèvre d'étanchéité (6d) contre la surface interne d'un évidement (1a) de la bague extérieure (1) et étant recouverte par l'insert annulaire (1b) sur la bague extérieure et l'autre branche (6c) du joint d'étanchéité (6) orientée obliquement vers l'extérieur étant inclinée de telle sorte que cette branche (6c) s'ouvre en cas de surpression dans le palier.

2. Palier à rouleaux de support selon la revendication 1, **caractérisé en ce que** le joint d'étanchéité (6) avec sa lèvre d'étanchéité (6d) de la surface latérale intérieure de l'insert annulaire (1b) sur la bague extérieure est en regard de l'évidement (1a) avec une fente (7).

3. Palier à rouleaux de support selon la revendication 1 ou 2, **caractérisé en ce qu'**un disque de butée est à chaque fois intégré à une moitié de bague intérieure (12).
